# EUROPÄISCHE PATENTSCHRIFT

(11) **EP 0 653 365 B1**
(45) Veröffentlichungstag und Bekanntmachung des Hinweises auf die Patenterteilung: **15.04.1998**
(21) Anmeldenummer: 94250265.9
(22) Anmeldetag: 01.11.1994
(51) Int. Cl.: B65G 1/137, B65G 1/04

(54) **Einrichtung für die Kommissionierung von Stückgut**
Device for order picking of piece goods
Dispositif pour composer des commandes d'articles

(30) Priorität: 11.11.1993 DE 4339002
(43) Veröffentlichungstag der Anmeldung: 17.05.1995
(73) Patentinhaber: KOMMISIONIER- und HANDHABUNGSTECHNIK GmbH, D-45881 Gelsenkirchen (DE)
(72) Erfinder: Schönbohm, Hartmut, Dr.-Ing., D-58454 Witten (DE)
(74) Vertreter: Meissner, Peter E., Dipl.-Ing.

(56) Entgegenhaltungen:
- US-A- 3 750 804

## Beschreibung

Es ist eine Einrichtung für die Kommissionierung von Stückgut bekannt, das in Reinen auf einer Warenbahn ansteht und mittels eines verfahrbaren oder versetzbaren Kommissioniergerätes einzeln in Kommissionierbehälter transportierbar ist (DE-A-32 13 119).

Das Kommissioniergerät besteht bekannterweise aus einem vorbeifahrenden Transportbehälter wobei das Verfahren zum automatischen Stapeln, Lagern und Entnehmen von Stückgut mehrerer Sorten aus Großlagern dahingehend ausgeführt wird, daß man das Stückgut von einer Rechneranlage gesteuert der Reihe nach mehreren Regalen mit Sortenmagazinen entnimmt und in die vorbeifahrenden Transportbehälter lädt. Es ist hierbei noch bekannt, die Geschwindigkeit der Transportbehälter entsprechend der Summe aus minimierter Entnahme-, Sammel- und Füllzeit so zu maximieren, daß das Entnehmen in einer minimalen Zeit abläuft.

Dieses bekannte Verfahren bzw. die bekannte Vorrichtung sind jedoch nur dann geeignet, wenn das Stückgut durch Auswurf in den fahrenden Transportbehälter gelangt. Eine genauere Ansteuerung des Kommissioniergerätes relativ zur Entnahmestation ist nicht möglich.

Des weiteren ist aus dem US-Patent 3,750,804 ein Regallagersystem bekannt, das im wesentlichen aus einem Regalbediengerät besteht, das entlang eines von Regalen begrenzten Ganges verfahrbar ist. Die Regale bestehen aus Warenbahnen nach Art eines Durchlauflagers, die in Richtung des Regalbediengerätes ein Gefälle aufweisen. Das in den Warenbahnen gelagerte Stückgut steht an einem Anschlag an, der die Warenbahnen an dem dem Regalbediengerät zugewandten Ende begrenzt. Dieser Anschlag ist schwenkbar an der Warenbahn befestigt und kann zur Freigabe eines Stückgutteils nach unten weggeklappt werden. Die Betätigung des Anschlagelements erfolgt über das Regalbediengerät.

Das Regalbediengerät ist bekannterweise aus einem vertikalen Mast aufgebaut, der an seinen Enden über Fahrwerke in Schienen geführt ist und an dem in Vertikalrichtung ein Hubtisch verfahrbar ist. An der dem Regal und somit auch dem Anschlagelement zugewandten Seite des Hubtisches ist eine Kolbenzylindereinheit angeordnet, über die die Anschlagklappe betätigbar ist. Durch Herunterklappen des Anschlagelementes wird einerseits das Stückgut freigegeben und andererseits der zwischen dem Hubtisch und der Warenbahn bestehende Spalt überbrückt. Somit kann das Stückgutteil über ein an dem Hubtisch angeordneten Greifer aus der Warenbahn auf den Hubtisch gezogen werden. Die Bewegungsrichtung des Greifers während des Entnahmevorgangs des Stückgutteils aus der Warenbahn verläuft hier im wesentlichen parallel zum Hubtisch des Regalbediengerätes und somit horizontal.

Der im Anspruch 1 angegebenen Erfindung liegt das Problem zugrunde, das Stückgut aus einer sortierten Warenbahn einzeln sicher zu erfassen, zu übernehmen und dann weiterzutransportieren.

Die gestellte Aufgabe wird erfindungsgemäß dadurch gelöst, daß das auf einer schrägen Rutsche jeweils gegen eine erste Stoppfläche anliegende Stückgut mittels des gegen eine zweite Stoppfläche anfahrbaren Kommissioniergeräts aufnehmbar und über ausgewählten entfernten Kommissionierbehältern freigebbar ist. Eine derartige Einrichtung ist insbesondere für Schachteln, Dosen, Flaschen u.dgl. geeignet, und diese relativ kleinen Stückgüter können daher genau und sicher aus der Warenbahn entnommen werden.

Eine vorteilhafte Ausgestaltung der Erfindung ist im Anspruch 2 angegeben. Die Weiterbildung nach Anspruch 2 besteht darin, daß die erste Stoppfläche aus einer inneren Endbegrenzung der Rutsche und die zweite Stoppfläche aus der Außenfläche der Endbegrenzung der Rutsche besteht. Beim Arbeiten mit einem derartigen verfahrbaren oder versetzbaren Kommissioniergerät ist ein schnelles und preiswertes Kommissionieren von Stückgut der Artikel, wie Schachteln, Dosen, Flaschen u.dgl., bei geringen bis mittleren Entnahmestuckzahlen und -häufigkeiten wirtschaftlich möglich.

Nach weiteren Merkmalen ist vorgesehen, daß die Rutsche allseitig weitgehend geschlossen und nur im Bereich der ersten Stoppfläche eine dem Stückgut anpaßbare und der Wirkungsrichtung des Kommissioniergerätes gegenüberliegende Durchtrittsöffnung aufweist. Dadurch wird die Entnahme der Artikel an einem vorbestimmten Ort, wie z.B. einem Schacht durch das mobile, automatische Entnahmegerät nach verschiedenen Richtungen möglich.

Dem genauen und schnellen und sicheren Anfahren des Kommissioniergerätes wird außerdem gerecht, das an dem Kommissioniergerät parallelverlaufend zur Wirkungsrichtung eines Greifers ein sich in Taststellung bis in die zweite Stoppfläche erstreckender Taster angeordnet ist. Eine solche Einrichtung kann vorteilhafterweise für mehrere übereinander angeordnete Warenbahnen jeweils gleich mit der gewünschten Regal- und Positioniergenauigkeit angewendet werden.

Nach weiteren Merkmalen ist vorgesehen, daß an dem Taster ein pneumatisch oder hydraulisch betätigbarer Schwenkantrieb angelenkt ist dessen Zylinder an einem verfahrbaren oder versetzbaren Rahmen gelenkig befestigt ist. Dieser Schwenkantrieb gestattet, das Kommissioniergerät bzw. den Taster durch eine Schwenkbewegung anzustellen.

Eine weitere Ausgestaltung der Erfindung besteht darin, daß die Endbegrenzung mit zumindest einer Ausnehmung versehen ist und daß der Greifer jeweils durch diese Ausnehmung der Endbegrenzung hindurchführbar ist. Hier wird das Kommissioniergerät bzw. der Taster unmittelbar an das Stückgut angestellt, so die Anstellgenauigkeit für das Kommissioniergerät besonders hoch ist.

In Ausgestaltung dieses Gedankens ist ferner vorgesehen, daß der Taster an seiner Spitze mit einem Winkelstück versehen ist.

Vorteilhafterweise ist der Greifer als Saugvorrichtung ausgebildet.

Ausführungsbeispiele der Erfindung sind in der Zeichnung dargestellt und werden im folgenden näher beschrieben. Es zeigen
- Fig. 1: eine Seitenansicht zweier übereinander angeordneter Warenbahnen mit dem Kommissioniergerät in Wartestellung,
- Fig. 2: dieselbe Seitenansicht wie Fig. 1, wobei das Kommissioniergerät bereits angestellt ist,
- Fig. 3: dieselbe Seitenansicht wie Fig. 1 mit dem Entnahmevorgang durch das Kommissioniergerät,
- Fig. 4: eine Seitenansicht mit übereinander angeordneten Warenbahnen und mehreren Kommissionierbehältern,
- Fig. 5: eine Fig. 1 entsprechende Seitenansicht mit einer alternativen Ausführungsform des Kommissioniergerätes bzw. der ersten und zweiten Stoppfläche,
- Fig. 5a: eine Ansicht in Richtung A gemäß Fig. 5,
- Fig. 6: die Seitenansicht wie die vorangehenden Figuren, wobei das Kommissioniergerät in Taststellung gefahren ist , entsprechend Fig. 2,
- Fig. 7: den Beginn der Aufnahme des Stückgutes durch das Kommissioniergerät und
- Fig. 8: die Seitenansicht entsprechend den vorangehenden Figuren mit dem Kommissioniergerät und den Vorratsbehältern, wobei das Stückgut in einen der Vorratsbehälter gegeben wird.

Die Einrichtung für die Kommissionierung von Stückgut 1, das in Stückgutreihen 2 auf einer Warenbahn 3 ansteht, weist ein verfahrbares oder versetzbares Kommissioniergerät 4 auf, das das Stückgut 1 in Kommissionierbehälter 5 transportiert.

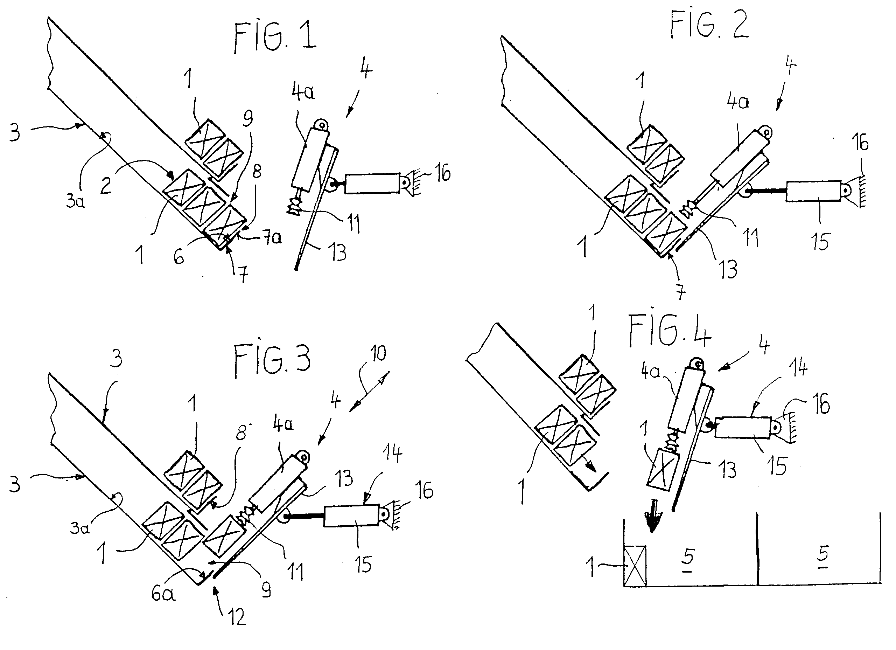

Die Warenbahn 3 bildet eine schräge Rutsche 3a, die am Ende jeweils mit Endbegrenzungen 8 versehen ist. Diese Endbegrenzungen 8 stellen jeweils eine erste Stoppfläche 6, und zwar durch deren Innenfläche 6a dar und eine zweite Stopplfäche 7 durch ihre Außenfläche 7a. Das auf der schrägen Rutsche 3a jeweils gegen die erste Stoppfläche 6 anliegende Stückgut 1 ist mittels des gegen die zweite Stoppfläche 7 anfahrbaren Kommissioniergeräts 4 aufnehmbar und wird über ausgewählten entfernten Kommissionierbehältern 5 freigegeben (Fig. 4).

Das zu kommissionierende Stückgut 1 liegt in einer Warenbahn, die schachtförmig ausgebildet ist und so im Winkel zur horizontalen verläuft, daß das Stückgut von selbst zum unteren Ende der schrägen Rutsche 3a herunterrutscht. Das Kommissionierlager ist in Ruhestellung u.U. weit von den Kommissionierbehältern 5 entfernt, so daß insoweit keine Kollisionsgefahr besteht. In dieser Position wird das Kommissioniergerät 4 vor der entsprechenden schrägen Rutsche 3a durch eine vertikale und/oder horizontale Bewegung angestellt. Sobald die richtige Position erreicht ist (Fig. 2). führt das Kommissioniergerät 4 in Arbeitsstellung.

Hierfür ist vorgesehen die erste Stoppfläche 6 aus der inneren Endbegrenzung 8 der Rutsche 3a und die zweite Stoppfläche 7 aus der Außenfläche 7a der Endbegrenzung 8 der Rutsche 3a besteht.

Die Rutsche 3a ist wegen ihrer Schachtform allseitig weitgehend geschlossen und weist nur im Bereich der ersten Stoppfläche 6 eine dem Stückgut 1 anpaßbare und der Wirkungsrichtung 10 des Kommissioniergerätes gegenüberliegende Durchtrittsöffnung 9 auf. Dabei wird die Endbegrenzung 8 der Bewegung in Richtung auf die Arbeitsstellung durch einen sich anlegenden Taster 13 bewirkt, der sich gewissermaßen am Kommissionierschacht selber abstützt. Hierzu ist an dem Kommissioniergerät 4 parallelverlaufend zur Wirkungsrichtung 10 eines Greifers 11 der sich in Taststellung 12 bis in die zweite Stoppfläche 7 erstreckende Taster 13 angeordnet. Dadurch werden alle Maßfehler der Rutsche 3a bzw. der Warenbahn 3 weitestgehend ausgeglichen. In dieser Position steht bereits der Greifer 11 in der richtigen Lage, um das Stückgut 1 zu übernehmen. Diese Lage wird u.a. auch dadurch erreicht, daß an dem Taster 13 ein pneumatisch oder hydraulisch betätigbarer Schwenkantrieb 14 angelenkt ist, dessen Zylinder 15 an einem verfahrbaren oder versetzbaren Rahmen 16 für das Kommissioniergerät 4 gelenkig befestigt ist.

Zur Entnahme fährt ein Antrieb 4a des Kommissioniergerätes 4, das aus einem Zylinder mit einer Saugvorrichtung 19 besteht, auf das Stückgut 1, und dieses wird durch den Vakuumsauger angesaugt , und der Antrieb 4a fährt in seine Ruhestellung zurück (Fig. 3). Dadurch wird das zu Kommissionierende Stückgut 1 aus der Rutsche 3a herausgehoben. Abschließend fährt das Kommissioniergerät 4 in seine Ausgangsstellung (Fig. 1) zurück. Zu diesem Zeitpunkt ist der Artikel noch immer über den vakuumschlauch angesaugt (Fig. 4). Zur Beendigung des Zyklus wird der Vakuumsauger augeblasen und das Kommissionierte Stückgut 1 fällt in einen der Kommissionierbehälter 5 herunter. Damit ist der Kommissionierzyklus beendet. Der Kommissionierzyklus kann sofort und sehr schnell entweder an der gleichen Rutsche 3a wiederholt werden, oder es kann eine Fahrbewegung eingeschaltet werden, die das Kommissioniergerät 4 zu einer neuen Kommissionierposition bringt.

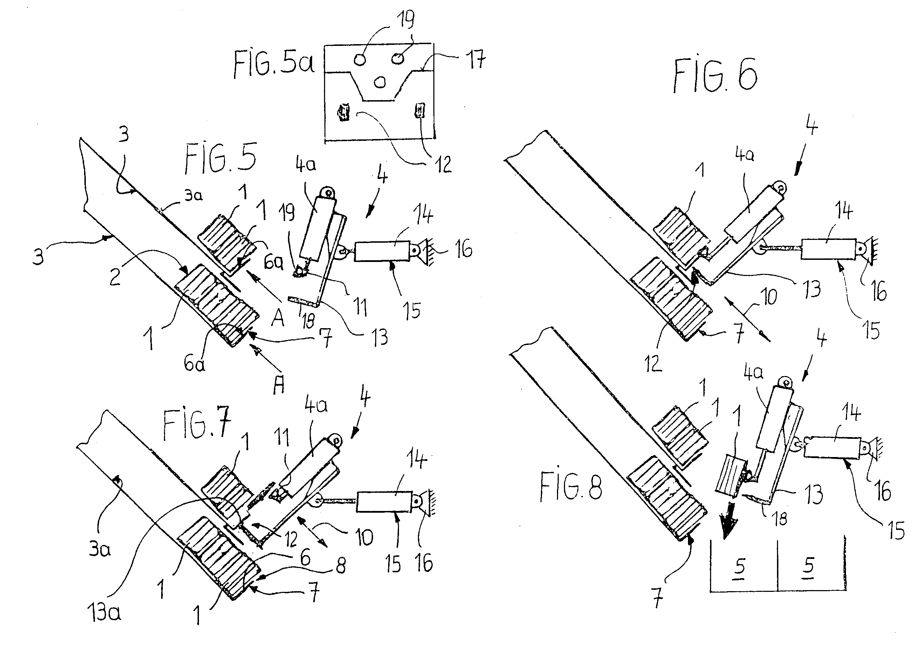

Eine alternative Ausführungsform ist in den Fig. 5 bis 8 dargestellt. Dort ist vorgesehen, daß die Endbegrenzung 8 mit zumindest einer Ausnehmung 17 versehen ist und daß der Greifer 11 jeweils durch diese Ausnehmung 17 der Endbegrenzung 8 hindurchführbar ist. Dabei ist der Taster 13 an seiner Spitze 13a mit einem Winkelstück 18 versehen. Außerdem ist der Greifer 11 als Saugvorrichtung 19 ausgebildet. In den Fig. 5 und 5a ist dargestellt, wie ein ansonsten gleiches Kommissioniergerät 4 für sehr flache Stückgüter 1, wie z.B. Kompaktdisks arbeitet. Die Grundbewegung des Antastens an die zweite Stoppfläche ist insoweit unterschiedlich als (Fig. 5a) die Taststellung 12 noch auf der Außenfläche 7a liegt, Jedoch die Saugvorrichtung 19 durch die Ausnehmung 17 hindurch arbeitet. Die Grundbewegung des Kommissioniersystems, d.h. das Antasten, das Entnehmen des Stückgutes 1, das Zurückschwenken in die Ausgangsstellung und das Abwerfen des Stückgutes 1 ist gleich wie beschrieben, es besteht jedoch der Unterschied, daß die Saugvorrichtung 19 nicht auf der oberen Fläche des Stückgutes 1 arbeitet, sondern auf der Seitenfläche, wie dies bei sehr schmalen Kompaktdisks vorteilhaft ist.

## Patentansprüche

1. Einrichtung für die Kommissionierung von Stückgut (1) aus Warenbahnen (3), die als schräge Rutschen (3a) ausgebildet sind, auf denen das Stückgut (1) in Reihe gegen eine erste, an der Rutsche (3a) angeordnete Stoppfläche (6) ansteht, mit einem verfahr- oder versetzbaren Kommissioniergerät (4) mit einer einen Greifer (11) aufweisenden Entnahmevorrichtung, von der nach Anstellen des Kommisioniergerätes (4) mit der Entnahmevorrichtung vor die entsprechende Warenbahn (3) das Stückgut (1) einzeln entnehmbar und an einen ausgewählten, entfernt angeordneten Kommissionierbehälter (5) abgebbar ist,
dadurch gekennzeichnet,
daß zur Entnahme des Stückguts (1) der Greifer (11) der Entnahmevorrichtung vor dem Einfahrvorgang in die Rutsche (3a) über einen Schwenkantrieb (14) in eine Entnahmestellung schwenkbar ist, in der sich ein an der Entnahmevorrichtung angeordneter mit dem Greifer schwenkbarer Taster (13) an eine zweite Stoppfläche (7) anlegt, die an dem jeweiligen der Entnahmevorrichtung zugewandten Ende der Rutsche (3a) angeordnet ist.

2. Einrichtung nach Anspruch 1,
dadurch gekennzeichnet,
daß zur anschließenden Entnahme des Stückgutes (1) der Greifer (11) in der Entnahmestellung über einen Antrieb (4a) im wesentlichen senkrecht zur Förderrichtung der Rutsche (3a) sowie in Richtung des Stückgutes (1) verfahrbar ist.

3. Einrichtung nach Anspruch 2,
dadurch gekennzeichnet,
daß der Taster (13) sich parallel zur Verfahrrichtung (10) des Greifers (11) erstreckt und an dem verschwenkbaren Antrieb (4a) angeordnet ist.

4. Einrichtung nach einem der Ansprüche 1 bis 3,
dadurch gekennzeichnet,
daß die Rutsche (3a) eine Endbegrenzung (8) aufweist, deren Innenfläche (6a) die erste Stoppfläche (6) und deren Außenfläche (7a) die zweite Stoppfläche (7) bildet.

5. Einrichtung nach einem der Ansprüche 1 bis 4,
dadurch gekennzeichnet,
daß die Rutsche (3a) allseitig weitgehend geschlossen und nur im Bereich der ersten Stoppfläche (6) eine dem Außenabmaßen des Stückguts (1) angepaßte Durchtrittsöffnung (9) aufweist, die dem Greifer (11) in seiner Entnahmestellung zugewandt ist.

## Claims

1. An apparatus for commissioning piece goods (1) from goods tracks (3) which are in the form of inclined chutes (3a) on which the piece goods (1) queue up in a line against a first stopping surface (6) located on the chute (3a), with a movable or displaceable commissioning apparatus (4) having a removal device bearing a gripper (11), by which, after placing the commissioning apparatus (4) with the removal device in front of the corresponding goods track (3), the piece goods (1) can be removed individually and can be delivered to a selected, distant commissioning container (5),
characterised in that in order to remove the piece goods (1) the gripper (11) of the removal device before the operation of introduction into the chute (3a) is pivotable by means of a pivot drive (14) into a removal position in which a probe (13) which can be pivoted with the gripper and is arranged on the removal device comes to lie against a second stopping surface (7) which is located on the respective end of the chute (3a) which faces the removal device.

2. An apparatus according to Claim 1, characterised in that for the subsequent removal of the piece goods (1) the gripper (11) in the removal position can be moved by means of a drive (4a) substantially at right-angles to the direction of conveyance of the chute (3a) and in the direction of the piece goods (1).

3. An apparatus according to Claim 2, characterised in that the probe (13) extends parallel to the direction of movement (10) of the gripper (11) and is arranged on the pivotable drive (4a).

4. An apparatus according to one of Claims 1 to 3, characterised in that the chute (3a) has an end limit (8), the inner surface (6a) of which forms the first stopping surface (6) and the outer surface (7a) of which forms the second stopping surface (7).

5. An apparatus according to one of Claims 1 to 4, characterised in that the chute (3a) is largely closed on all sides and only in the region of the first stopping surface (6) has a passage opening (9) adapted to the external dimensions of the piece goods (1) which faces the gripper (11) in its removal position.

## Revendications

1. Dispositif pour rassembler et préparer des marchandises (1) pour l'expédition à partir de bandes (3), qui sont réalisées sous forme de glissières inclinées (3a), sur lesquelles les marchandises (1) se succèdent contre une première surface d'arrêt (6) agencée sur la glissière (3a), comportant un appareil (4) pour rassembler et préparer les marchandises pouvant être déplacé ou décalé ayant un dispositif d'évacuation présentant un moyen de préhension (11), duquel, après mise en place de l'appareil (4) pour rassembler et préparer les marchandises ayant le dispositif d'évacuation devant la bande correspondante (3), les marchandises (1) peuvent être évacuées individuellement et délivrer à un réceptacle (5) pour rassembler et préparer les marchandises, choisi et agencé de façon éloignée,
caractérisé en ce que, pour évacuer les marchandises (1), le moyen de préhension (11) du dispositif d'évacuation, avant le processus d'entrée sur la glissière (3a), peut être pivotée, par l'intermédiaire d'un entraînement de pivotement (14), dans une position d'évacuation dans laquelle un palpeur (13), agencé sur le dispositif d'évacuation et pouvant pivoter avec le moyen de préhension, s'applique sur une seconde surface d'arrêt (7), qui est agencée à l'extrémité respective de la glissière (3a) en regard du dispositif d'évacuation.

2. Dispositif selon la revendication 1,
caractérisé en ce que, pour l'évacuation suivante des marchandises (1), le moyen de préhension (11) peut être amené dans la position d'évacuation par l'intermédiaire d'un entraînement (4a) généralement perpendiculairement à la direction de transport de la glissière (3a) ainsi qu'en direction des marchandises (1).

3. Dispositif selon la revendication 2,
caractérisé en ce que le palpeur (13) s'étend parallèlement à la direction de déplacement (10) du moyen de préhension (11) et est agencé sur l'entraînement (4a) pouvant pivoter.

4. Dispositif selon une des revendications 1 à 3,
caractérisé en ce que la glissière (3a) présente une limitation d'extrémité (8) dont la surface interne (6a) forme la première surface d'arrêt (6) et dont la surface externe (7a) forme la seconde surface d'arrêt (7).

5. Dispositif selon une des revendications 1 à 4,
caractérisé en ce que la glissière (3a) est généralement fermée de tous les côtés et présente, uniquement dans la zone de la première surface d'arrêt (6), une ouverture de passage (9) adaptée aux dimensions externes des marchandises (1), qui est en regard du moyen de préhension (11) dans sa position d'évacuation.
